# EUROPÄISCHE PATENTANMELDUNG

(11) **EP 3 023 141 A1**
(43) Veröffentlichungstag der Anmeldung: **25.05.2016**
(21) Anmeldenummer: 15000895.1
(22) Anmeldetag: 26.03.2015
(51) Int. Cl.: B01J 4/00, F23D 14/76, F23D 14/22

(54) **VERFAHREN UND VORRICHTUNG ZUR EINLEITUNG REAKTIVER GASE IN EINEN REAKTIONSRAUM**

(30) Priorität: 20.11.2014 DE 102014017118; 15.12.2014 DE 102014018376
(71) Anmelder: Linde Aktiengesellschaft, 80331 München (DE)
(72) Erfinder: Hanno, Tautz, 82538 Geretsried (DE)
(74) Vertreter: Fischer, Werner

(57) **Zusammenfassung**

Die Erfindung betrifft ein Verfahren sowie eine Vorrichtung zur getrennten Einleitung eines Brenngases (2) sowie eines Oxidationsmittels (1) in den Reaktionsraum (R) eines Rohrreaktors (Z), um dort gemischt und unter Freisetzung von Wärme umgesetzt zu werden. Kennzeichnend ist, dass sowohl das Brenngas (2) als auch das Oxidationsmittel (1) in jeweils mehr als drei Gasstrahlen (K, L) in den Reaktionsraum (R) eingeleitet werden, wobei der Abstand zwischen einem Brenngas- (K) und einem zu diesem nächst benachbarten Oxidationsmittelstrahl (L) beim Eintritt in den Reaktionsraum (R) zwischen 2 und 500mm, bevorzugt zwischen 5 und 50mm liegt.

## Beschreibung

Die Erfindung betrifft ein Verfahren sowie eine Vorrichtung zur getrennten Einleitung eines Brenngases sowie eines Oxidationsmittels in den Reaktionsraum eines Rohrreaktors, um dort gemischt und unter Freisetzung von Wärme umgesetzt zu werden.

Ein Rohrreaktor, wie er beispielsweise aus der Patentschrift DE10320965B4 bekannt ist, wird in erster Linie zur Erzeugung von Synthesegas durch Partielle Oxidation eingesetzt, wozu ein Kohlenwasserstoffe enthaltendes Brenngas zusammen mit einem Oxidationsmittel im Reaktionsraum des Reaktors umgesetzt wird. Zur Einleitung der umzusetzenden Gase in den Reaktionsraum werden Strahl- bzw. Drallbrenner vorgeschlagen, mit im Brennerkopf konzentrisch zueinander angeordnetem Rohren, die die Zuführungskanäle für die Gasströme bilden. Aufgrund des geringen Durchmesserverhältnisses von Reaktionsraum und Brennerkopf besteht beim Betrieb eines Rohrreaktors die Gefahr der Ausbildung stehender Schallwellen, durch die der Brennerbetrieb gestört werden kann. Außerdem wird die Rußbildung durch die strömungsarmen Gebiete im Bereich des Gasaustritts unterstützt. Da stets ein gewisser Abstand der Gasaustritts- zur Flammengeschwindigkeit eingehalten werden muss, ist darüber hinaus der Lastbereich, in dem solche Brenner stabil betrieben werden können, beschränkt. Teilweise werden daher spezielle Vorheizbrenner eingesetzt, mit denen der kalte Reaktor auf die Zündtemperatur der eingesetzten Gase gebracht wird, und die vor Aufnahme des Normalbetriebs aus dem heißen Reaktor ausgebaut werden müssen.

Die Führung der umzusetzenden Gase in lediglich durch eine Rohrwand voneinander getrennten Zuführungskanälen begünstigt die Ausbildung von Schäden. So kann beispielsweise das in einem Kanal zugeführtes Oxidationsmittel mit dem in einem direkt benachbarten Kanal zuströmenden Brenngas in unmittelbarer Nähe der gemeinsamen Austrittskante reagieren, so dass diese durch Abbrand von Rohrmaterial beschädigt wird.

Ein weiteres Problem beim Einsatz derartiger Brenner kann sich aus der Flammenlänge ergeben. Insbesondere bei Anfahrvorgängen, bei denen der Druck im Reaktionsraum meist weit niedriger als im Normalbetrieb ist, besteht die Gefahr dass die Brennerflamme die Wände des Reaktionsraums berührt und dort zu starken thermischen Belastungen führt.

Aufgabe der vorliegenden Erfindung ist es daher, ein Verfahren sowie eine Vorrichtung der gattungsgemäßen Art anzugeben, durch die Nachteile des Standes der Technik überwunden werden.

Diese Aufgabe wird verfahrensseitig erfindungsgemäß dadurch gelöst, dass sowohl das Brenngas als auch das Oxidationsmittel in jeweils mehr als drei Gasstrahlen in den Reaktionsraum eingeleitet werden, wobei der Abstand zwischen einem Brenngas- und einem zu diesem nächst benachbarten Oxidationsmittelstrahl beim Eintritt in den Reaktionsraum zwischen 2 und 500mm, bevorzugt zwischen 5 und 50mm liegt.

Weitere Ausgestaltungen des erfindungsgemäßen Verfahrens sehen vor, dass
- die Oxidationsmittelstrahlen parallel zueinander in den Reaktionsraum eingeleitet werden.
- dass einem Oxidationsmittelstrahl wenigstens ein Brenngasstrahl so zugeordnet ist, dass sich die Achsen der beiden Gasstrahlen einen Winkel einschließen, der zwischen 5° und 75°, bevorzugt zwischen 20° und 60° liegt.
- einem Oxidationsmittelstrahl wenigstens zwei Brenngasstrahlen so zugeordnet sind, dass sie eine Wirbelströmung um die Achse des Oxidationsmittelstrahls antreiben.
- Brenngas und Oxidationsmittel mit Mindestgeschwindigkeiten in den Reaktionsraum eingeleitet werden, die jeweils um den Faktor 1/F größer sind als die mittlere Strömungsgeschwindigkeit des bei der Umsetzung der beiden Gase gebildeten Produktgases im Reaktionsraum des Rohrreaktors, wobei F vom Druck p im Reaktionsraum gemäß der Formel F=A*p^{(-0.398)} abhängt, in der A ein Zahl zwischen 0,25 und 2,5 ist.
- die Zahl der Brenngas- und Oxidationsmittelstrahlen in Abhängigkeit von der im Reaktionsraum freizusetzenden thermischen Leistung erhöht oder erniedrigt wird.
- die Durchmesser und/oder die Anzahl der Gasstrahlen je Flächeneinheit über der Querschnittsfläche des Rohrreaktors gleich oder unterschiedlich sind.

Weiterhin betrifft die Erfindung eine Vorrichtung zur getrennten Einleitung von Einsatzgasen in den Reaktionsraum eines Rohrreaktors, mit reaktionsraumseitig in Austrittsöffnungen endenden Zuführungskanälen für ein Brenngas und ein Oxidationsmittel.

Vorrichtungsseitig wird die gestellte Aufgabe erfindungsgemäß dadurch gelöst, dass sowohl die Zuführungskanäle für das Brenngas als auch die für das Oxidationsmittel in zumindest drei Austrittsöffnungen enden, wobei der Abstand zwischen einer Austrittsöffnung für das Brenngas und einer zu dieser nächst benachbarten Austrittsöffnung für das Oxidationsmittel zwischen 2 und 500mm, bevorzugt zwischen 5 und 50mm liegt und wobei die Austrittsenden der Zuführungskanäle von einem thermischen Isoliermaterial umgeben oder durch ein thermisches Isoliermaterial gebildet sind.

Weitere Ausgestaltungen der erfindungsgemäßen Vorrichtung sehen vor, dass
- die Austrittsenden der Zuführungskanäle für das Oxidationsmittel zueinander parallel angeordnet sind.
- dass jedem Zuführungskanal für Oxidationsmittel ein Zuführungskanal für Brenngas zugeordnet ist, wobei die Achsen der Austrittsenden der beiden Kanäle einen Winkel einschließen, der zwischen 5° und 75°, bevorzugt zwischen 20° und 60° liegt.
- sämtliche Austrittsöffnungen in genau einer zur Längsachse des Reaktionsraums parallelen Ebene angeordnet sind.
- das Austrittsende eines Zuführungskanals als Diffusor oder als Konfusor ausgebildet ist.
- eine Austrittsöffnung eine Durchmesser zwischen 2 und 20mm, vorzugsweise jedoch zwischen 5 und 10 mm aufweist.
- das thermische Isoliermaterial so im Rohrreaktor angeordnet ist, dass auf der Gaseintrittseite des Rohrreaktors einen Gasraum vom Reaktionsraum abtrennt, der zur Verteilung von Benngas auf die Austrittsöffnungen genutzt werden kann.
- ein Oxidationsmittelkanal und der oder die diesem Oxidationsmittelkanal zugeordneten Brenngaskanäle mit dem sie umgebenden thermischen Isoliermaterial in einem Brennermodul zusammengefasst sind.
- ein Brennermodul mit wenigstens einem zweiten gleichen oder von diesem verschiedenen Brennermodul zu einer Einheit zusammengefasst ist, die reaktionsraumseitig eine geschlossene Fläche aufweist.
- die Durchmesser und/oder die Anzahl der Zuführungskanäle je Flächeneinheit über der Querschnittsfläche des Rohrreaktors gleich oder unterschiedlich sind.

Durch die erfindungsgemäße Aufteilung von Brenngas und Oxidationsmittel auf eine Vielzahl von Gasstrahlen kann die Flammenlänge reduziert und das Temperaturprofil über den Querschnitt des Reaktionsraumes homogenisiert werden. Der Abstand zwischen Brenngas- und Oxidationsmittelstrahlen sorgt für eine Verlagerung der Mischzone der beiden Gasarten weg von der für ihre Einleitung eingesetzten Vorrichtung, so dass die thermische Belastung der Vorrichtung gegenüber dem Stand der Technik verringert ist.

Im Folgenden soll die Erfindung anhand dreier Ausführungsbeispiele erläutert werden, die in den **Figuren 1** bis **3** schematisch dargestellt sind.

Die Figur 1 zeigt einen Rohrreaktor mit einem erfindungsgemäßen Brenner.

Die Figuren 2 und 3 zeigen Beispiele für mögliche Formen von Brennermodulen und deren Anordnung. Die Ansicht ist vom Reaktionsraum in Richtung der Längsachse des Rohrreaktors.

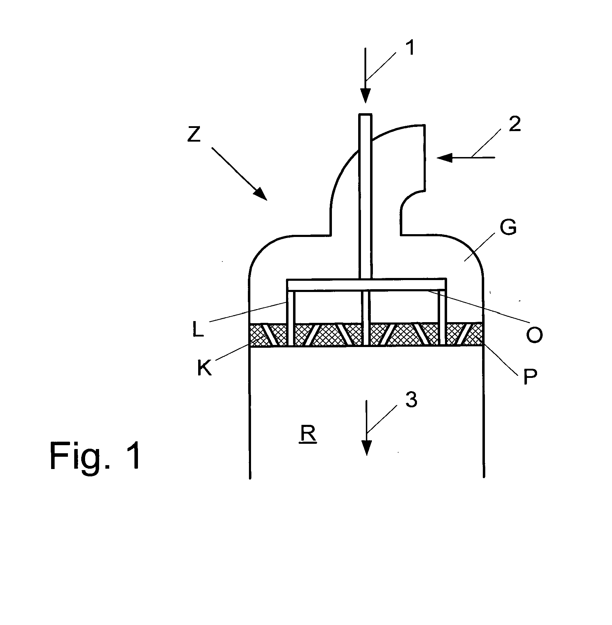

Am oberen Ende des in Figur 1 im Längsschnitt dargestellten Rohrreaktors Z ist ein erfindungsgemäßer Brenner angeordnet, über den ein Brenngas 2 alleine oder mit Dampf gemischt sowie ein Oxidationsmittel 1 in den Reaktionsraum R eingeleitet werden können. Der Brenner umfasst eine Platte P aus einem thermisch isolierenden Material, die den Querschnitt des Reaktionsraums R ausfüllt und diesen von dem Gasraum G abtrennt. Das Brenngas 2, bei dem es sich beispielsweise um Erdgas handelt, wird ggf. gemeinsam mit Dampf über den Gasraum G auf die Brenngaskanäle K verteilt, über die es in den Reaktionsraum R gelangt. Die gegenüber der Längsachse des Rohrreaktors geneigten Brenngaskanäle K werden entweder durch Aussparungen im thermisch isolierenden Material der Platte P direkt gebildet oder durch Rohre aus Metall oder Keramik, die von thermisch isolierendem Material umgeben sind. In der Darstellung sind jeweils zwei Brenngaskanäle K einem Oxidationsmittelkanal L zugeordnet, der parallel zur Längsachse des Rohrreaktors Z verläuft. Genauso wie für die Brenngaskanäle K gilt für die über die Verteilerleitung O verbundenen Oxidationsmittelkanäle L, dass sie entweder durch Aussparungen im thermisch isolierenden Material der Platte P direkt oder durch Rohre aus Metall oder Keramik gebildet werden, die von thermisch isolierendem Material umgeben sind. Durch die Neigung der Brenngaskanäle K gegenüber einem zugehörigen Oxidationsmittelkanal L wird die Ausbildung einer Wirbelströmung und damit einer kurzen Flamme bzw. Reaktionszone, in der Synthesegas 3 entsteht. In der Figur 1 ist ein Rohreaktor Z mit senkrechter Längsache gezeigt, in dessen Reaktionsraum R Brenngas 2 und Oxidationsmittel 1 von oben nach unten eingeleitet werden. Dies soll jedoch nicht ausschließen, dass der Rohrreaktor Z eine Längsachse mit beliebiger Ausrichtung haben kann und Brenngas 2 und Oxidationsmittel 1 in entsprechend beliebiger Orientierung in den Reaktionsraum R einleitbar sind.

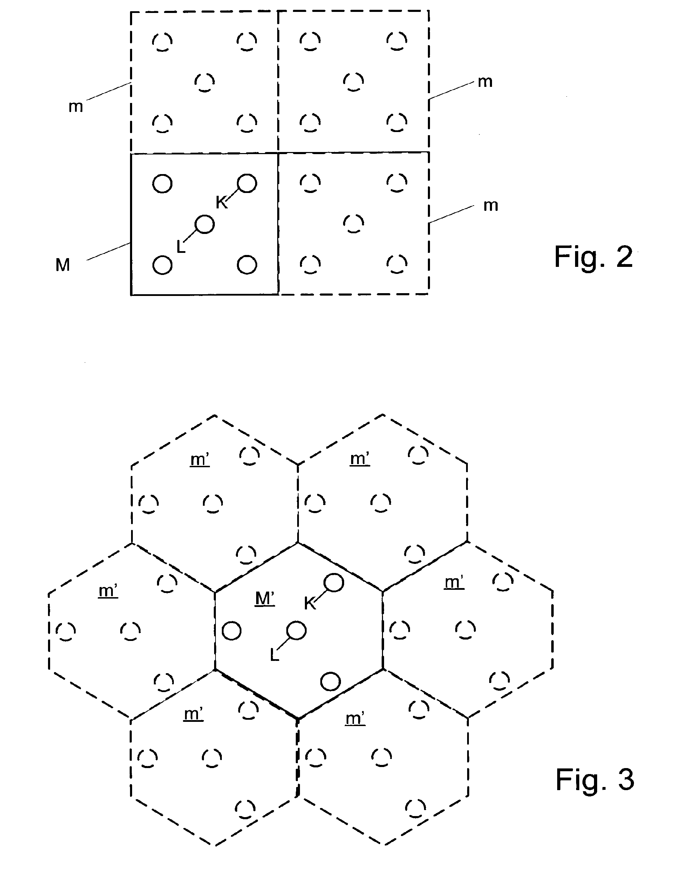

Das in Figur 2 dargestellte Brennermodul M weist eine Quadratische Stirnfläche auf, in deren Mitte der Oxidationsmittelkanal L mündet. Dem Oxidationsmittelkanal L sind die vier Brenngaskanäle K zugeordnet. Um die Brennerleistung zu erhöhen, können mehrere Module verbunden werden, so dass sich eine geschlossen Fläche ergibt. Ein Beispiel hierfür ist das aus dem Brennermodul M sowie den drei gleichen, gestrichelt gezeichneten Modulen m gebildete Quadrat.

In Figur 3 ist ein Brennermodule M' weist eine sechseckige Stirnfläche auf, in deren Mitte der Oxidationsmittelkanal L mündet. Dem Oxidationsmittelkanal L sind die drei Brenngaskanäle K zugeordnet. Um die Brennerleistung zu erhöhen, können mehrere Module verbunden werden, so dass sich eine geschlossen Fläche ergibt. Ein Beispiel hierfür ist die aus dem Brennermodul M' sowie den sechs, gestrichelt gezeichneten Modulen m' gebildete Fläche.

## Patentansprüche

1. Verfahren zur getrennten Einleitung eines Brenngases (2) sowie eines Oxidationsmittels (1) in den Reaktionsraum (R) eines Rohrreaktors (Z), um dort gemischt und unter Freisetzung von Wärme umgesetzt zu werden, **dadurch gekennzeichnet, dass** sowohl das Brenngas (2) als auch das Oxidationsmittel (1) in jeweils mehr als drei Gasstrahlen (K, L) in den Reaktionsraum (R) eingeleitet werden, wobei der Abstand zwischen einem Brenngas- (K) und einem zu diesem nächst benachbarten Oxidationsmittelstrahl (L) beim Eintritt in den Reaktionsraum (R) zwischen 2 und 500 mm, bevorzugt zwischen 5 und 50 mm liegt.

2. Verfahren nach Anspruch 1, **dadurch gekennzeichnet, dass** die Oxidationsmittelstrahlen (L) parallel zueinander in den Reaktionsraum (R) eingeleitet werden.

3. Verfahren nach Anspruch 2, **dadurch gekennzeichnet, dass** einem Oxidationsmittelstrahl (L) wenigstens ein Brenngasstrahl (K) so zugeordnet ist, dass sich die Achsen der beiden Gasstrahlen einen Winkel einschließen, der zwischen 5° und 75°, bevorzugt zwischen 20° und 60° liegt.

4. Verfahren nach Anspruch 3, **dadurch gekennzeichnet, dass** einem Oxidationsmittelstrahl (L) wenigstens zwei Brenngasstrahlen (K) so zugeordnet sind, dass sie eine Wirbelströmung um die Achse des Oxidationsmittelstrahls antreiben.

5. Verfahren nach einem der Ansprüche 1 bis 4, **dadurch gekennzeichnet, dass** Brenngas (2) und Oxidationsmittel (1) mit Mindestgeschwindigkeiten in den Reaktionsraum (R) eingeleitet werden, die jeweils um den Faktor 1/F größer sind als die mittlere Strömungsgeschwindigkeit des bei der Umsetzung der beiden Gase gebildeten Produktgases (3) im Reaktionsraum (R) des Rohrreaktors, wobei F vom Druck p im Reaktionsraum (R) gemäß der Formel F=A*p^{(-0.398)} abhängt, in der A ein Zahl zwischen 0,25 und 2,5 ist.

6. Verfahren nach einem der Ansprüche 1 bis 5, **dadurch gekennzeichnet, dass** die Zahl der Brenngas- (K) und Oxidationsmittelstrahlen (L) in Abhängigkeit von der im Reaktionsraum (R) freizusetzenden thermischen Leistung erhöht oder erniedrigt wird.

7. Vorrichtung zur getrennten Einleitung von Einsatzgasen (1, 2) in den Reaktionsraum (R) eines Rohrreaktors (Z), mit reaktionsraumseitig in Austrittsöffnungen endenden Zuführungskanälen für ein Brenngas (K) und ein Oxidationsmittel (L), **dadurch gekennzeichnet, dass** sowohl die Zuführungskanäle für das Brenngas (K) als auch die für das Oxidationsmittel (L) in zumindest drei Austrittsöffnungen enden, wobei der Abstand zwischen einer Austrittsöffnung für das Brenngas (2) und einer zu dieser nächst benachbarten Austrittsöffnung für das Oxidationsmittel (1) zwischen 2 und 500mm, bevorzugt zwischen 5 und 50mm liegt und wobei die Austrittsenden der Zuführungskanäle (K, L) von einem thermischen Isoliermaterial umgeben oder durch ein thermisches Isoliermaterial (P) gebildet sind.

8. Vorrichtung nach Anspruch 7, **dadurch gekennzeichnet, dass** die Austrittsenden der Zuführungskanäle für das Oxidationsmittel (L) zueinander parallel angeordnet sind.

9. Vorrichtung nach Anspruch 8, **dadurch gekennzeichnet, dass** jedem Zuführungskanal für Oxidationsmittel (L) ein Zuführungskanal für Brenngas (K) zugeordnet ist, wobei die Achsen der Austrittsenden der beiden Kanäle einen Winkel einschließen, der zwischen 5° und 75°, bevorzugt zwischen 20° und 60° liegt.

10. Vorrichtung nach einem der Ansprüche 7 bis 9, **dadurch gekennzeichnet, dass** sämtliche Austrittsöffnungen in genau einer zur Längsachse des Reaktionsraums parallelen Ebene angeordnet sind.

11. Vorrichtung nach einem der Ansprüche 7 bis 10, **dadurch gekennzeichnet, dass** das Austrittsende eines Zuführungskanals als Diffusor oder als Konfusor ausgebildet ist.

12. Vorrichtung nach einem der Ansprüche 7 bis 11, **dadurch gekennzeichnet, dass** eine Austrittsöffnung eine Durchmesser zwischen 2 und 20mm, vorzugsweise jedoch zwischen 5 und 10mm aufweist.

13. Vorrichtung nach einem der Ansprüche 7 bis 12, **dadurch gekennzeichnet, dass** das thermische Isoliermaterial (P) so im Rohrreaktor (Z) angeordnet ist, dass auf der Gaseintrittseite des Rohrreaktors (Z) einen Gasraum (G) vom Reaktionsraum (R) abtrennt, der zur Verteilung von Benngas (2) auf die Austrittsöffnungen genutzt werden kann.

14. Vorrichtung nach einem der Ansprüche 7 bis 13, **dadurch gekennzeichnet, dass** ein Oxidationsmittelkanal (L) und der oder die diesem Oxidationsmittelkanal (L) zugeordneten Brenngaskanäle (K) mit dem sie umgebenden thermischen Isoliermaterial (P) in einem Brennermodul (M, M') zusammengefasst sind.

15. Vorrichtung nach Anspruch 14, **dadurch gekennzeichnet, dass** ein Brennermodul (M, M') mit wenigstens einem zweiten gleichen oder von diesem verschiedenen Brennermodul (m, m') zu einer Einheit zusammengefasst ist, die reaktionsraumseitig eine geschlossene Fläche aufweist.
